# EUROPÄISCHE PATENTSCHRIFT

(11) **EP 2 489 866 B1**
(45) Veröffentlichungstag und Bekanntmachung des Hinweises auf die Patenterteilung: **01.08.2018**
(21) Anmeldenummer: 12000560.8
(22) Anmeldetag: 28.01.2012
(51) Int. Cl.: F02K 9/97

(54) **Raketentriebwerk mit einer ausfahrbaren Düsenerweiterung**
Rocket engine with an extendible nozzle
Moteur fusée avec un dispositif de buse deployable

(30) Priorität: 15.02.2011 DE 102011011220
(43) Veröffentlichungstag der Anmeldung: 22.08.2012
(73) Patentinhaber: ArianeGroup GmbH, 82024 Taufkirchen (DE)
(72) Erfinder: Lux, Johannes, 41812 Erkelenz (DE); Reinhard, Max, 73732 Esslingen (DE)
(74) Vertreter: Marschall, Stefan

(56) Entgegenhaltungen:
- DE-A1- 4 343 658
- DE-A1- 19 524 875
- RU-C2- 2 180 405
- US-A- 4 313 567
- US-A1- 2003 136 128

## Beschreibung

Die Erfindung betrifft ein Raketentriebwerk nach dem Oberbegriff des Patentanspruchs 1, mit einer ausfahrbaren Düsenerweiterung, bestehend aus vorzugsweise drei gegeneinander in Längsrichtung des Triebwerks verschieblich ausgebildeten, ineinandergreifend angeordneten konusförmigen Segmenten, die miteinander im ausgefahrenen Zustand verriegelbar sind.

Eine Reihe von Oberstufen-Raketentriebwerken ist mit ausfahrbaren Düsenerweiterungen ausgestattet, die in der Regel aus einem hitzebeständigen Verbundwerkstoff hergestellt sind. Aufgrund der Größe dieser Düsenerweiterungen bestehen diese oft aus zwei oder mehreren, vorzugsweise drei konusförmigen Segmenten, die nachfolgend als Konusse oder Konen bezeichnet werden. Gründe für diese getrennte Ausführung sind zum einem eingeschränkte Fertigungsmöglichkeiten und zum anderen die Einsparung von Stauraum während der ersten Phase des Aufstiegs. So bestehen zum Beispiel auch die Düsenerweiterungen des europäischen Vinci-Triebwerks und des US-amerikanischen Triebwerks RL10B-2 aus drei derartigen Konen.

Bei einer bekannten, derzeit in Gebrauch befindlichen Anordnung dieser Art, bei der die Düsenerweiterung aus insgesamt drei Konen besteht, müssen diese drei Konen quasi gleichzeitig und gemeinsam montiert werden, da aufgrund der überlappenden Form der einzelnen Segmente dies nur von der Raketenspitze her abwärts möglich ist. Auch erlauben die bei dieser bekannten Anordnung für die kraftschlüssige Verbindung der Konen im ausgefahrenen Zustand verwendeten Verbindungskomponenten eine solche Montage nur von oben, d.h. von der Raketenspitze her. Dies bedeutet andererseits, dass im Fall von erforderlich werdenden Wartungsarbeiten der unterste Konus nicht demontiert werden kann, ohne zur gleichen Zeit die beiden darüber liegend angeordneten Konen ebenfalls demontiert zu haben. Insbesondere die Verbindung zwischen dem Triebwerk und dem obersten Konus ist allgemein besonders aufwendig zu lösen. Insgesamt sind derartige Arbeiten somit mit einem hohen Aufwand verbunden.

Bei der bekannten Anordnung wird lediglich der oberste Konus der Düsenerweiterung nach dem Start, d.h. während des Fluges der Rakete, erst in dem Moment verriegelt, in dem die Düsenerweiterung ausgefahren wird. Die Verriegelung dieses Konus mit dem darunterliegend angeordneten mittleren Konus erfolgt dabei über ringförmig miteinander in Eingriff gelangende Ansätze bzw. Anschläge an den beiden Konen sowie über eine Vielzahl von am obersten Konus über den Umfang verteilt angeordneten fingerförmigen flexiblen Rastelementen. Diese pressen einen Ansatz am oberen Rand des mittleren Konus gegen einen entsprechend ausgebildeten Ansatz am oberen Konus und verriegeln die beiden Konen dadurch selbsttätig gegeneinander. Dagegen werden der mittlere und der unterste Konus bereits manuell miteinander verriegelt, wenn sich die Rakete noch am Boden befindet. Auch die Verriegelung dieser beiden Konen miteinander erfolgt bei dieser bekannten Anordnung im Prinzip auf die gleiche Weise und mit den gleichen Ansätzen bzw. Anschlägen sowie fingerförmigen flexiblen Rastelementen wie die Verriegelung zwischen dem obersten und dem mittleren Konus, wobei die Rastelemente in diesem Fall am unteren Rand des mittleren Konus, ebenfalls über den Umfang verteilt, angeordnet sind.

Die aus der bekannten Anordnung und der mit diesen verbundenen Einschränkungen hinsichtlich der nicht gegebenen gegenseitigen freien Bewegbarkeit der Konen resultierenden Nachteile sind zusammengefasst die Folgenden:
- Sobald der oberste Konus befestigt ist, müssen für den Fall, dass das Triebwerk bereits in die Raketenstufe integriert ist, die beiden darunter anzuordnenden Konen ebenfalls schon um das Triebwerk herum angeordnet sein.
- Es besteht ein vergleichsweise hohes Risiko, dass die Konen bei der Integration oder während des Transportes beschädigt werden.
- Es besteht nur ein begrenzter Zugang zu den Komponenten des Triebwerks.
- Es ist nicht möglich, falls erforderlich, einen der unteren Konen auszuwechseln ohne auch den obersten Konus zu demontieren.
- Ein Transport ist nur mit allen drei Konen möglich und erfordert daher geeignete Unterstützungselemente für das Triebwerk sowie für die bereits montierten Konen.
- Sobald vor dem Start die Raketenstufe einmal auf die Trägerrakete, den Launcher, aufgesetzt worden ist, ist ein Zugang zum Triebwerk nur noch unter stark erschwerten Bedingungen möglich.

Weiterer Stand der Technik ist in der US 2003/136128 A1 offenbart Diese Druckschrift zeigt eine Düsenverlängerung für ein Raketentriebwerk, welche an einer Düsenöffnung angebracht werden kann. Die Düsenerweiterung hat mehrere Konen und kann beim Demontieren in Schubrichtung von der Düsenöffnung abgekoppelt werden.

Aufgabe der vorliegenden Erfindung ist es, eine Anordnung der eingangs genannten Art derart auszubilden, dass sie möglichst kostengünstig zu fertigen und einfach zu handhaben ist. Zudem soll durch die Erfindung die Zugänglichkeit zum Triebwerk verbessert werden.

Die Erfindung löst diese Aufgabe durch ein Raketentriebwerk mit den Merkmalen des Patentanspruch 1. Ein solches Raketentriebwerk sieht vor, dass wenigstens ein Verriegelungsbereich zwischen zwei Konen über eine Anordnung aus Anschlägen und flexiblen Rastelementen selbsttätig verriegelbar ausgebildet ist und wenigstens ein Verriegelungsbereich zwischen zwei weiteren Konen ausschließlich manuell verriegelbar ausgebildet ist.

Vorteilhafte Weiterbildungen sind durch die Merkmale der Unteransprüche gekennzeichnet.

So ist in vorteilhafter Weiterbildung der Erfindung vorgesehen, dass derjenige Bereich des mittleren Konus, der die Anschläge aufweist, an denen die Rastelemente des obersten Konus zur Anlage gelangen, als ringförmiger Ansatz ausgebildet sind, der über Verschraubungen mit dem mittleren Konus verbunden ist. Da über diese Verschraubungen relativ hohe Kräfte übertragen werden können, kann die Anzahl dieser Verschraubungen wesentlich geringer sein als die Anzahl der fingerförmigen Rastelemente. Damit ist auch nur eine geringe Anzahl an Schraubenbolzen zu entfernen, um einen der auf diese Weise miteinander verbundenen Konen vollständig zu entfernen. Zudem kann eine Montage dieser Verschraubungen in einer nicht eingerasteten Konfiguration des mittleren Konus erfolgen, wobei die Schraubenköpfe von außen leicht zugänglich sind. Demgegenüber ist bei der in Verwendung befindlichen bekannten Anordnung ein Spezialwerkzeug erforderlich, um die Gesamtheit der fingerförmigen flexiblen Rastelemente zu entriegeln. Ein weiterer Vorteil ergibt sich dadurch, dass während des Betriebs des Treibwerks die Düsenströmung auf der Innenseite der Düse nicht durch Bohrungen oder Schraubenköpfe gestört wird.

Die erfindungsgemäße Lösung bietet die Möglichkeit, die einzelnen Konen wahlweise und unabhängig voneinander von oben oder von unten sowohl zu montieren als auch zu entfernen. Letzteres ist insbesondere am Integrationsort der Oberstufe von hohem Interesse, sobald das Triebwerk in die oberste Raketenstufe integriert ist.

Zudem bietet die Erfindung die Möglichkeit, die einzelnen Konen vom Triebwerk getrennt zu transportieren, so dass keine zusätzliche mechanische Unterstützung für einen horizontalen Transport des Triebwerks erforderlich ist. Auch ist durch die Lösung nach der Erfindung bei der Wartung oder bei einem Austausch von Triebwerkskomponenten eine deutlich verbesserte Zugänglichkeit zum Triebwerk gewährleistet. Dies führt zu einer signifikanten Reduzierung der Arbeitszeit aufgrund einer Optimierung der betreffenden Arbeitsabläufe. Darüber hinaus ermöglicht dies eine flexiblere Planung der einzelnen Arbeitsschritte. Zugleich wird das Risiko einer Beschädigung der Düsenerweiterung oder von Teilen derselben in allen Phasen drastisch reduziert, da die Konen bei allen Operationen entfernt werden können.

Weiterhin wird nach der Erfindung eine deutliche Gewichtsreduktion der Konen sowie eine Verringerung der Anzahl benötigter Einzelteile erreicht. Die Möglichkeit der Entfernung der Konen in jeder Phase der Startvorbereitungen wiederum bewirkt eine Verringerung der selbst erzeugten Belastungen des Triebwerks. Dies gilt insbesondere beim horizontalen Transport des Triebwerks, bei dem ansonsten die Gewichtskräfte der Konen kompensiert werden müssten.

Ferner erlaubt die Anordnung nach der Erfindung den Wegfall einer aufwendigen Schwerkraftkompensationsvorrichtung während durchzuführender Tests des Ausfahrmechanismus, da die Gewichtskraft der Konen dann nicht kompensiert werden muss. Zudem werden Schwenktests des Triebwerks mittels Aktuatoren um einen Drehpunkt am oberen Ende des Triebwerks durch den Wegfall der Konen und die damit einhergehende Verringerung der Trägheitsmomente repräsentativer im Bezug auf die Charakterisierung des Schwenkmechanismus.

Da die Abmessungen der Konen die gleichen bleiben wie bei den bereits bekannten und derzeit verwendeten Anordnungen, ist keine oder nur eine geringe Modifikation der schon vorhandenen Werkzeuge erforderlich. Aufgrund des sehr einfachen Aufbaus der Anordnung nach der Erfindung wird die Fertigung der Konen wesentlich vereinfacht und damit sehr viel kostengünstiger, da die erforderliche Arbeitszeit für die Herstellung derartiger Düsenerweiterungen erheblich verringert wird. Durch eine Modifikation vorhandener Hardware kann überdies auch die Prüfung der einzelnen Komponenten schnellstmöglich realisiert werden.

Nachfolgend soll die Erfindung anhand von in der Zeichnung dargestellten Ausführungsbeispielen näher erläutert werden. Es zeigen
- Fig. 1:: eine Düsenerweiterung an einem Triebwerk in seitlicher Ansicht,
- Fig. 2:: eine schematische Darstellung des Ausfahr- und Verriegelungsvorgangs entsprechend dem Stand der Technik bei einer Düsenerweiterung gemäß Fig. 1 in drei Phasen,
- Fig. 3:: einen Schnitt durch einen Verbindungsbereich zweier Komponenten einer Düsenerweiterung gemäß Fig. 1 und
- Figur 4-9:: jeweils Schnitte durch alternative Ausführungsformen des Verbindungsbereichs zweier Komponenten einer Düsenerweiterung gemäß Fig. 1.

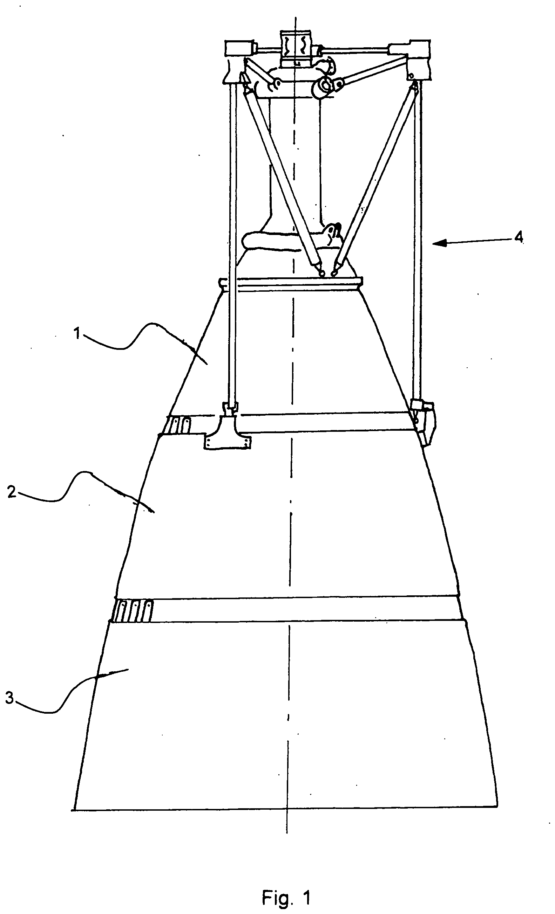

Die Abbildung gemäß Fig. 1 zeigt eine Düsenerweiterung in ausgefahrenem Zustand. Die Düsenerweiterung setzt sich aus insgesamt drei Konen, einem oberen Konus 1, einem mittleren Konus 2 und einem unteren Konus 3, zusammen. Im oberen Teil der Figur ist ferner eine Ausfahrvorrichtung 4 für den mittleren Konus 2 und den unteren Konus 3 erkennbar.

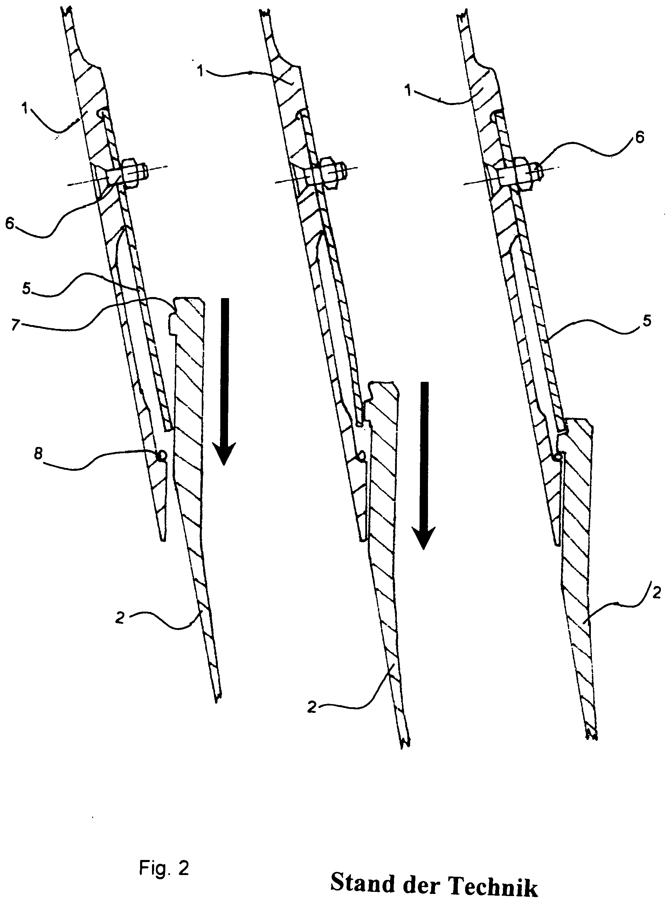

In Fig. 2 ist in schematischer Weise der Ausfahr- und Verriegelungsvorgang von Konen einer Düsenerweiterung in drei Phasen dargestellt. Die Abbildung zeigt dabei diesen Vorgang bei einer Anordnung gemäß dem Stand der Technik. Die Fixierung des, wie in der Figur durch Pfeile angedeutet, entlang der Oberfläche des Konus 1 gleitenden Konus 2 erfolgt über eine Vielzahl von, im Fall des hier beschriebenen Ausführungsbeispiels insgesamt 69, fingerförmigen Rastelementen 5, die am Konus 1 über den Umfang verteilt angeordnet und über Schrauben 6 an diesem gehaltert sind. Die Rastelemente 5 gelangen beim Abgleiten des mittleren Konus 2 auf den Rastelementen 5 des obersten Konus 1 an einem Ansatz 7 am oberen Rand des Konus 2 zur Anlage, wodurch sie diesen gegen einen entsprechend ausgebildeten Ansatz 8 am Rand des Konus 1 pressen und die beiden Konen 1 und 2 auf diese Weise gegeneinander verriegeln. Dieser Verriegelungsvorgang erfolgt während des Fluges und ist ein vergleichsweise sensibler Vorgang.

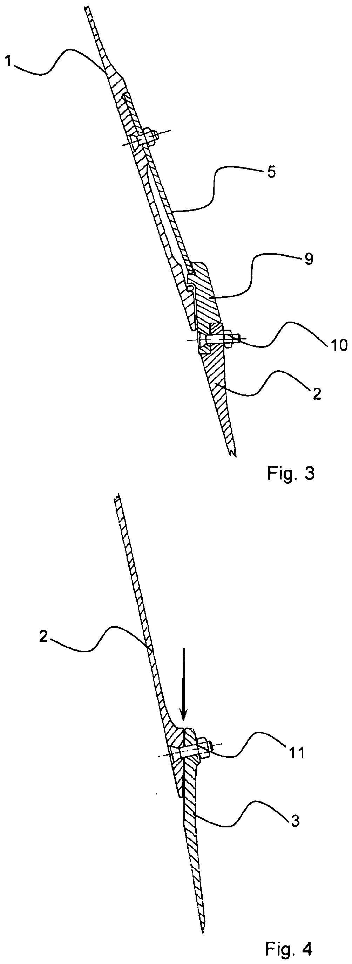

Die in Fig. 3 dargestellte Anordnung unterscheidet sich von der vorangehend beschriebenen dahingehend, dass eine zusätzliche Schnittstelle stromabwärts der eigentlichen Rast-Schnittstelle der Konen 1 und 2 vorgesehen ist, die es ermöglicht, diese beiden Konen vollständig voneinander zu separieren, während sich die Rakete noch am Boden befindet, das Triebwerk jedoch bereits in die Raketenstufe oder auch in einen Prüfstand integriert ist. Zu diesem Zweck ist am oberen Rand des Konus 2 ein ringförmiges Element 9 mittels Schrauben 10 befestigt, dessen oberer Endbereich einen Anschlag aufweist, an dem die fingerförmigen Rastelemente 5 zur Anlage gelangen. Auf diese Weise ist sichergestellt, dass nach dem Lösen der Schrauben 10 der Konus 2 separat vom Konus 1 verschoben werden kann.

Durch Entriegeln der Rastelemente 5 kann zudem auch das ringförmige Element 9 nach oben vom Konus 1 entfernt werden.

Die Anzahl der Schrauben 10 muss dabei nicht identisch sein mit der Anzahl der fingerförmigen Rastelemente 5. Vielmehr ist für die Verbindung des ringförmigen Elementes 9 mit dem Konus 2 eine deutlich geringere Anzahl an Schrauben 10 als die Anzahl der fingerförmigen Rastelemente 5 ausreichend, da diese Schrauben 10 während des Fluges keinen hohen Scherkräften ausgesetzt sind. Die Montage des ringförmigen Elementes 9 am Konus 2 kann in einer entriegelten Konfiguration in einer Weise durchgeführt werden, bei der die Köpfe der Schrauben 10 von außen zugänglich sind. Durch die Verwendung von zum Beispiel einem geteilten Ring oder mehrerer Segmente anstelle eines kompletten Ringes kann zudem bei dieser Anordnung erreicht werden, dass das obere Ende des Konus 2 nicht bereits im Voraus auf dem Konus 1 angebracht werden muss.

Wie beschrieben, ist die Verbindung zwischen den Konen 2 und 3 keine funktionelle und die Verriegelung dieser Konen 2 und 3 miteinander erfolgt üblicherweise manuell bereits am Boden. Wie in Fig. 4 dargestellt, ist für die Verbindung zwischen diesen beiden Konen eine Verschraubung vorgesehen. Die Figur zeigt dabei einen Schnitt durch eine erste Ausführungsform des Verbindungsbereiches der Konen 2 und 3 mittels Schrauben 11, die die Kräfte zwischen den beiden Konen übertragen. Wichtig ist, dass auch in diesem Fall, wie durch den Pfeil dargestellt, die Separationsebene zwischen den Konen 2 und 3 in vertikaler Richtung verläuft, so dass nach dem Lösen der Schrauben 11 der Konus 3 entweder aufwärts oder abwärts gegenüber dem Konus 2 beliebig frei bewegt werden kann.

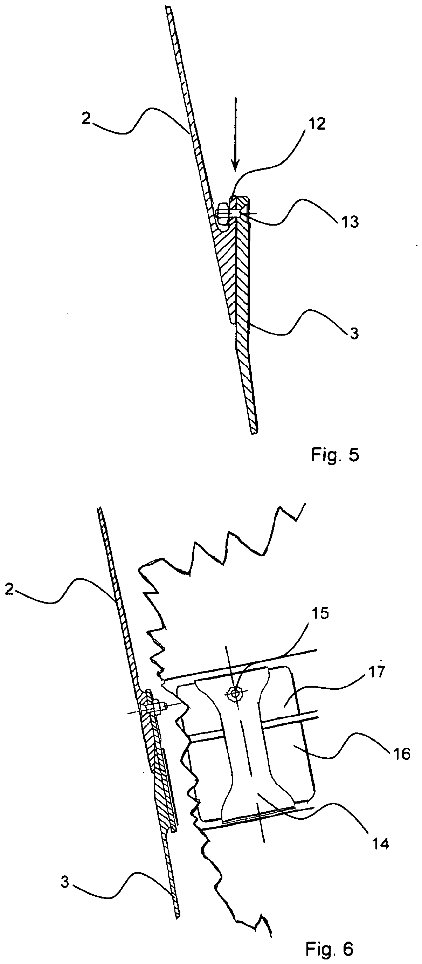

Eine ähnliche Lösung für eine manuell am Boden herzustellende Verbindung zwischen den beiden Konen 2 und 3 ist auch in Fig. 5 dargestellt. Die Schrauben 13 verbinden in diesem Fall den oberen Bereich des Konus 3 mit einem Ansatz 12 des Konus 2. Auch im Fall des in dieser Figur gezeigten Ausführungsbeispiels verläuft, wie durch den Pfeil in der Figur dargestellt, die Separationsebene zwischen den Konen 2 und 3 in vertikaler Richtung, so dass auch hier nach dem Lösen der Schrauben 13 der Konus 3 entweder aufwärts oder abwärts gegenüber dem Konus 2 beliebig bewegt werden kann. Diese Konstruktion ist ähnlich der vorangehend beschriebenen mit dem Unterschied, dass die Montage der Schrauben 13 in diesem Fall auf einfache Weise und jederzeit von außen erfolgen kann.

Bei dem in Fig. 6 gezeigten Ausführungsbeispiel werden im Vergleich zu den beiden vorangehend beschriebenen Lösungen die Kräfte mittels formschlüssiger Verbindungselemente 14 übertragen, die in patchförmige verstärkte Bereiche 16, 17 der beiden Konen 2 und 3 greifen. Diese Verbindungselemente 14 sind entweder, wie in der Zeichnung dargestellt, mittels Schrauben 15 nur am Konus 2 gehaltert. Sie können alternativ dazu aber auch ausschließlich am Konus 3 bzw. an beiden Konen 2 und 3 befestigt sein. Auch bei diesem Ausführungsbeispiel verläuft die Trennebene zwischen den beiden Konen 2 und 3 vertikal, wodurch die beiden Konen 2 und 3 nach dem Lösen der Schrauben 15 sowohl nach oben als auch nach unten voneinander getrennt werden können. Dabei können sowohl die Verbindungselemente 14 als auch die entsprechenden Aussparungen an den beiden verstärkten Bereichen 16 und 17 der Konen 2 bzw. 3 in einer Vielzahl von Formen gestaltet werden.

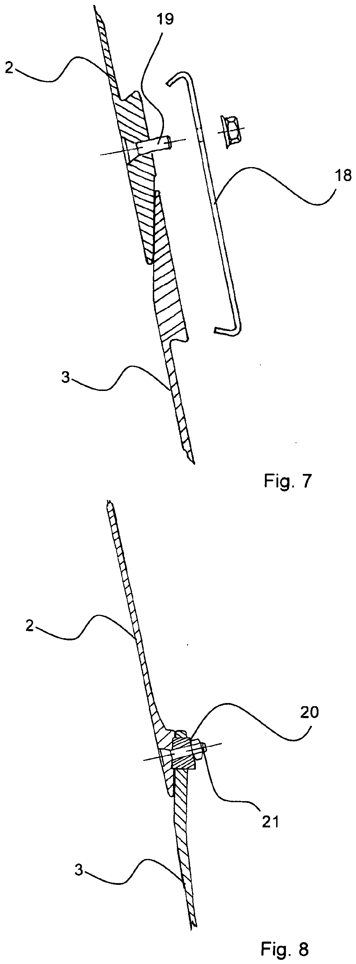

Ähnlich wie bei dem vorangehend beschriebenen Ausführungsbeispiel werden auch bei dem in Fig. 7 dargestellten Ausführungsbeispiel zusätzliche Verbindungselemente, in diesem Fall in Form von Klammern 18 verwendet. Diese Klammern 18 werden hauptsächlich den Zugkräften ausgesetzt, die aus dem Gewicht der Konen am Boden resultieren. Im Flug auftretende Schubkräfte werden hingegen teilweise von Schrauben 19 übertragen, mit denen die Klammern an den beiden Konen 2 und 3 fixiert werden. Das Material der Klammern 18 kann entweder aus einem Verbundwerkstoff oder aus einem hochtemperaturbeständigen Metall bestehen. Die Gesamtzahl der benötigten Klammern 18 hängt von ihrer Größe und Geometrie ab.

Bei dem in Fig. 8 dargestellten Ausführungsbeispiel werden die axialen Kräfte auf Buchsen 20 übertragen, die in den Konus 2 eingelassen sind und die in dem hier dargestellten Ausführungsbeispiel über Schrauben 21 in ihrer Position gehalten werden. Abhängig von der Ausführungsform sind dabei auch andere Lösungen möglich, die eine gewisse Flexibilität und relative Bewegung der Konen 2 und 3 zueinander ermöglichen. Alternativ dazu können die Buchsen 20 auch durch ein umlaufendes Spannband in ihrer Position fixiert werden. Weiterhin ist aber auch eine Fixierung mit Hilfe axialer Stifte im Konus 3 möglich, wobei diese Stifte aus einem Verbundwerkstoff oder einem hitzebeständigen Draht bestehen, die sowohl durch den Konus 3 als auch durch die jeweilige Buchse 20 führen und die parallel zur Trennebene verlaufen.

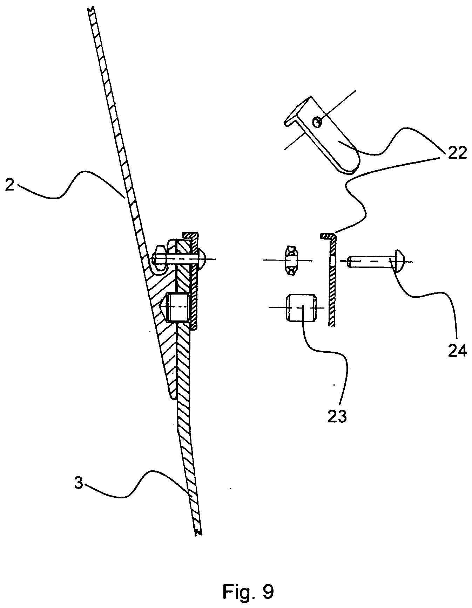

Schließlich zeigt Fig. 9 ein Ausführungsbeispiel, das eine Kombination aus vorangehend beschriebenen Ausführungsformen darstellt und bei dem eine Montage der Schrauben allein von außen her möglich ist. In diesem Fall werden Abdeckungen 22 verwendet, welche die Bolzen 23 in ihrer Position fixieren, wobei die Übertragung sämtlicher Kräfte allein durch die Bolzen 23 erfolgt. Dargestellt ist hier nur eine mögliche Lösung für die Fixierung der Bolzen 23. Bei einer anderen Lösung verlaufen Löcher mit geringem Durchmesser im Konus 3 parallel zur Trennebene sowohl durch das Konusmaterial als auch durch die Bolzen 23. Diese Löcher können Stifte aus einem Verbundwerkstoff oder einem hitzebeständigen Draht aufnehmen, wodurch die Verwendung der Schrauben 24 vermieden wird. Auch in diesem Fall können die Bolzen 23 aber auch durch ein umlaufendes Spannband in ihrer Position fixiert werden.

Einige der vorangehend beschriebenen Ausführungsformen verfügen ferner über in den Figuren nicht dargestellte Bohrungen, die neben ihrer Hauptfunktion auch während des Transports und des Handlings verwendet werden, um entsprechende Vorrichtungen zu fixieren.

## Patentansprüche

1. Raketentriebwerk mit einer ausfahrbaren Düsenerweiterung, bestehend aus vorzugsweise drei gegeneinander in Längsrichtung des Triebwerks verschieblich ausgebildeten, ineinandergreifend angeordneten konusförmigen Segmenten, die miteinander im ausgefahrenen Zustand verriegelbar sind, **dadurch gekennzeichnet, dass** wenigstens ein Verriegelungsbereich zwischen zwei Konen (1, 2) über eine Anordnung aus Anschlägen (7, 8) und flexiblen Rastelementen (5) selbsttätig verriegelbar ausgebildet ist und wenigstens ein Verriegelungsbereich zwischen zwei weiteren Konen (2, 3) ausschließlich manuell verriegelbar ausgebildet ist, wobei der wenigstens eine ausschließlich manuell verriegelbare Verriegelungsbereich eine Separationsebene aufweist, die zwischen den Konen (2, 3) in vertikaler Richtung verläuft, und wobei die flexiblen Rastelemente (5) am ersten Konus (1) gehaltert sind, die mit Anschlägen (9) im Eingriff bringbar sind, die ihrerseits lösbar mit dem zugehörigen zweiten Konus (2) verbunden sind.

2. Triebwerk nach Anspruch 1, **dadurch gekennzeichnet, dass** die Anschläge (7, 8) als ringförmiger Ansatz (9) ausgebildet sind, der über Schrauben (10) mit dem zweiten Konus (2) verbunden ist.

3. Triebwerk nach Anspruch 1 oder 2, **dadurch gekennzeichnet, dass** die ausschließlich manuell verriegelbare Verbindung zwischen zwei Konen (2, 3) über Schrauben (11, 13, 15) ausgeführt ist.

4. Triebwerk nach Anspruch 3, **dadurch gekennzeichnet, dass** die ausschließlich manuell verriegelbare Verbindung über mit den Schrauben (15) in Eingriff bringbare formschlüssige Verbindungselemente (14) erfolgt.

5. Triebwerk nach Anspruch 3, **dadurch gekennzeichnet, dass** die ausschließlich manuell verriegelbare Verbindung über Klammerelemente (18) erfolgt.

6. Triebwerk nach Anspruch 3, **dadurch gekennzeichnet, dass** die ausschließlich manuell verriegelbare Verbindung über Einsätze (20) erfolgt.

## Claims

1. A rocket engine with an extendible nozzle extension consisting of preferably three conically shaped segments designed so as to be movable against each other in longitudinal direction of the rocket engine and arranged so as to be in engagement with each other, wherein the segments are lockable when extended, **characterised in that** at least one locking region between two cones (1, 2) is designed so as to be automatically lockable via an arrangement of stops (7, 8) and flexible snap-in elements (5) and at least one locking region between two further cones (2, 3) is designed so as to be exclusively manually lockable; wherein the at least one exclusively manually lockable locking region comprises a separation plane which extends between the cones (2, 3) in vertical direction, and wherein the flexible snap-in elements (5) are mounted on the first cone (1), wherein the flexible snap-in elements (5) can be brought into engagement with stops (9) which in turn are releasably connected to the associated second cone (2).

2. The rocket engine according to claim 1, **characterised in that** the stops (7, 8) are designed as annular lugs (9) which are connected via screws (10) to the second cone (2).

3. The rocket engine according to claim 1 or 2, **characterised in that** the exclusively manually lockable connection between two cones (2, 3) is implemented via screws (11, 13, 15).

4. The rocket engine according to claim 3, **characterised in that** the exclusively manually lockable connection is effected via form-locked connecting elements (14), which can be brought into engagement with the screws (15) .

5. The rocket engine according to claim 3, **characterised in that** the exclusively manually lockable connection is effected via clamp elements (18).

6. The rocket engine according to claim 3, **characterised in that** the exclusively manually lockable connection is effected via inserts (20).

## Revendications

1. Moteur-fusée avec un élargissement de tuyère sortable, constitué de préférence de trois segments de forme conique, conçus en étant déplaçables l'un contre l'autre dans la direction longitudinale du moteur, placés en s'engageant les uns dans les autres, qui dans la position sortie peuvent être verrouillés ensemble, **caractérisé en ce qu'**au moins une zone de verrouillage entre deux cônes (1, 2) est conçue de manière automatiquement verrouillable par l'intermédiaire d'un agencement de butées (7, 8) et d'éléments d'enclenchement (5) souples et **en ce qu'**au moins une zone de verrouillage entre deux autres cônes (2, 3) est verrouillable de manière exclusivement manuelle, la zone de verrouillage verrouillable de manière exclusivement manuelle comportant un plan de séparation qui s'écoule entre les cônes (2, 3) dans la direction verticale, et les éléments d'enclenchement (5) souples qui peuvent être amenés en engagement avec des butées (9) qui pour leur part, sont assemblées de manière amovible avec le deuxième cône (2) associé étant maintenus sur le premier cône (1).

2. Moteur selon la revendication 1, **caractérisé en ce que** les butées (7, 8) sont conçues sous la forme d'un embout (9) de forme annulaire, qui par l'intermédiaire de vis (10) est assemblé avec le deuxième cône (2).

3. Moteur selon la revendication 1 ou 2, **caractérisé en ce que** l'assemblage verrouillable de manière exclusivement manuelle entre deux cônes (2, 3) est réalisé par l'intermédiaire de vis (11, 13, 15).

4. Moteur selon la revendication 3, **caractérisé en ce que** l'assemblage verrouillable de manière exclusivement manuelle s'effectue par l'intermédiaire d'éléments d'assemblage (14) à complémentarité de forme, pouvant être amenés en engagement avec les vis (15).

5. Moteur selon la revendication 3, caractérisé ce que l'assemblage verrouillable de manière exclusivement manuelle s'effectue par l'intermédiaire d'éléments formant agrafes (18).

6. Moteur selon la revendication 3, **caractérisé en ce que** l'assemblage verrouillable de manière exclusivement manuelle s'effectue par l'intermédiaire d'inserts (20) .
